# EUROPEAN PATENT APPLICATION

(11) **EP 3 226 137 A1**
(43) Date of publication of application: **04.10.2017**
(21) Application number: 16195249.4
(22) Date of filing: 24.10.2016
(51) Int. Cl.: G06F 11/14, G06F 9/445, G06F 11/16, G06F 11/20, G06F 17/30, G05B 19/00

(54) **METHOD OF MANAGING DB BETWEEN DUPLEX EMS SERVER**

(30) Priority: 31.03.2016 KR 20160039296
(71) Applicant: LSIS Co., Ltd., Gyeonggi-do 14119 (KR)
(72) Inventor: KWAK, Jong-Kab, 14118 Gyeonggi-do (KR); LEE, Seok-Chan, 14118 Gyeonggi-do (KR); LEE, Yong-Ik, 14118 Gyeonggi-do (KR)
(74) Representative: Zacco Sweden AB

(57) **Abstract**

A method of managing databases (DBs) in duplex servers includes: updating S110 a DB in the backup server to a first version; transmitting S120 a list of name keys in the backup server to the active server; transmitting S130 name keys that are identical between the active server and the backup server to the backup server; and synchronizing S140 DBs between the active server and the backup server by using the identical name keys. The data can be synchronized between DBs having different versions based on name keys.

## Description

### BACKGROUND

### 1. Technical Field

The present disclosure relates to a duplex EMS server and, more specifically, to a method of managing databases (DBs) between duplex servers by which DBs can be synchronized between servers by using name keys.

### 2. Description of the Related Art

An energy management system (EMS) monitors and manages a large electric utility grid and is an important system that forecasts electricity demand for many areas and controls the power generation. Such an EMS is an industrial control system and may have duplex servers for sate operation, i.e., a primary server and a standby server or an active server and a backup server.

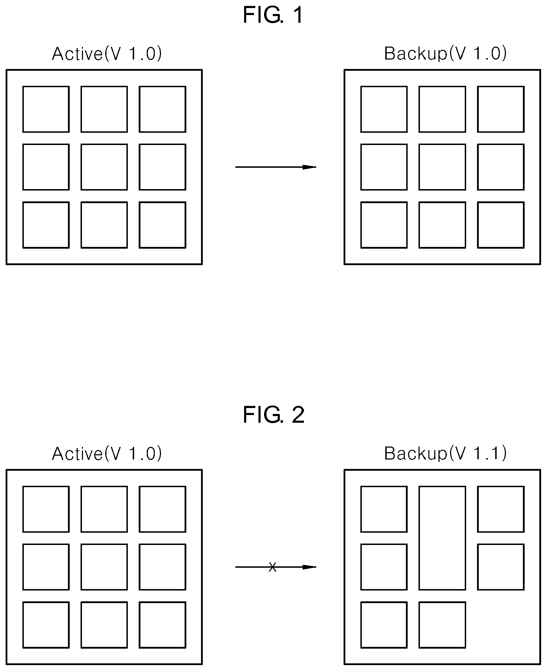

FIG. 1 is a diagram conceptually illustrating a typical duplex EMS server.

FIG. 1 illustrates DB transfer between an active server and a backup server of a duplex EMS server.

FIG. 1 shows an example where a DB is backed up from the active server to the backup server. In this example, the contents of the DB, i.e., the memory structure such as the size, order, location, etc., of the memory of the active server are equal to those of the backup server, such that the DB of the active server can be backed up by directly storing it in the backup server. Herein, this condition is said that the DBs are synchronized between the active server and the backup server.

As shown in FIG. 1, the DB contents of the active server may be identical to those of the backup server when the version of the active server is the same with that of the backup server (V1.0 in this example).

On the other hand, in the example shown in FIG. 2, the DB version of the active server is not the same with that of the backup server, e.g., the DB version of the active server is V1.0 whereas the DB version of the backup server is V1.1, such that the contents, i.e., the size, order, location or the like of the memory are changed. In this example, if the DB in the active server is directly stored in the backup server, the DBs might collide with each other or some of the data may be lost.

Accordingly, the DBs cannot be synchronized between the active server and the backup server.

In other words, the DB synchronization between the duplex servers is possible when the versions are the same, while the DB synchronization between the duplex servers is not possible when the servers have different DB versions.

There are many situations where the active server and the backup server have different DB versions. For example, when the DB in the backup server is updated pursuant to a DB update instruction before the DB in the active server is, the DB version of the active server becomes different from that of the backup server from that time point.

However, if an unexpected error takes place in driving an energy management system, the system may be switched over. When this happens it is essential to synchronize DBs between the duplex servers to provide the same data and operation environment as before the system is switched over.

Accordingly, the system can be started and operated stably only when the DB is synchronized for necessary data before the system is switched over, even during the DB update.

### SUMMARY

It is an aspect of the present disclosure to provide a method of managing DBs between duplex servers so that the DBs are synchronized between the servers before the system is switched over.

It is another aspect of the present disclosure to provide a method of managing DBs between duplex servers by which the DBs having different versions can be synchronized between the servers based on name keys.

It is yet another aspect of the present disclosure to provide a method of managing DBs between duplex servers by which DBs can be managed more efficiently and the system can be operated more stably.

Objects of the present disclosure are not limited to the above-described objects and other objects and advantages can be appreciated by those skilled in the art from the following descriptions. Further, it will be easily appreciated that the objects and advantages of the present disclosure can be practiced by means recited in the appended claims and a combination thereof.

In accordance with one aspect of the present disclosure, a method of managing databases (DBs) in duplex servers includes: updating a DB in the backup server to a first version; transmitting a list of name keys in the backup server to the active server; transmitting name keys that are identical between the active server and the backup server to the backup server; and synchronizing DBs between the active server and the backup server by using the identical name keys.

The version of the DB in the active server may be a second version.

The transmitting the list of name keys to the active server may include recognizing that the version of the DB in the backup server is different from the version of the DB in the active server.

The transmitting the name keys to the backup server may include extracting the identical name keys based on a result obtained by comparing the list of name keys in the active server with the list of name keys of the backup server.

The synchronizing the DBs between the active server and the backup server may include copying and storing data corresponding to the name keys received from the active server.

Each of the name keys may be defined as an ID assigned to access a data object in the DB.

The synchronizing the DBs between the active server and the backup server may include determining whether to copy and store data corresponding to the name keys received from the active server.

The synchronizing the DBs between the active server and the backup server may include requesting synchronization according to the list of name keys received at the backup server from the active server.

According to an exemplary embodiment of the present disclosure, DBs can be synchronized between duplex servers.

According to another exemplary embodiment of the present disclosure, DBs having different versions can be synchronized based on name keys.

According to yet another exemplary embodiment of the present disclosure, DBs can be managed more efficiently and thus the system can be operated more stably.

### BRIEF DESCRIPTION OF DRAWINGS

FIG. 1 is a diagram conceptually illustrating DB synchronization in a typical duplex EMS server;
FIG. 2 is a diagram graphically illustrating that DBs are not synchronized in the typical duplex EMS server;
FIG. 3 illustrates a DB synchronization process in an EMS system according to an exemplary embodiment of the present disclosure;
FIG. 4 illustrates a DB synchronization process in an EMS system according to an exemplary embodiment of the present disclosure;
FIG. 5 is a flowchart for illustrating a DB synchronization process in the EMS system shown in FIGS. 3 and 4.

### DETAILED DESCRIPTION

Detailed descriptions of well-known functions and structures incorporated herein will be omitted to avoid obscuring the subject matter of the present disclosure. Further, terms or words used in the specification and claims shall not be construed merely in a conventional and dictionary definition but shall be construed in a meaning and concept corresponding to the technical idea of the present invention based on the principle that an inventor is allowed to properly define the concepts of terms in order to describe his or her invention in the best way. Therefore, the terms, such as those defined in commonly used dictionaries, should be interpreted as having a meaning that is consistent with their meaning in the context of the relevant art and/or the present application.

Combinations of blocks in the accompanying drawings and steps in a flow chart may be performed according to computer program instructions. These computer program instructions can be installed in general-purpose computers, special-purpose computers or other processors of programmable data processing equipment. Therefore, the instructions executed by the computers or other processors of programmable data processing equipment create means for performing functions described in blocks in the drawings or in steps in the flow charts.

These computer program instructions can be stored in computer-usable or computer-readable memories which can assist in the computers or other processors of programmable data processing equipment to implement particular functions in particular manners. Therefore, the instructions stored in the computer-usable or computer-readable memories can be used to make products containing instruction means for performing the functions described in the blocks in the drawings or in the steps in the flow charts.

The computer program instructions can also be installed in the computers or other processors of programmable data processing equipment. Therefore, a sequence of operation steps can be performed on the computers or other processors of programmable data processing equipment to produce computer-executable processes. In addition, the instructions operating the computers or other processors of programmable data processing equipment can provide steps for executing the functions described in the blocks in the drawings or in the steps in the flow chart.

In addition, the blocks or the steps may represent portions of modules, segments or codes including one or more executable instructions for executing a specified logical function(s). In addition, in some alternative embodiments, it should be noted that the functions described in the blocks or steps may be performed out of a specified sequence. For example, two successive blocks or steps may be performed substantially at once or may be sometimes performed in a reverse order depending on a corresponding function.

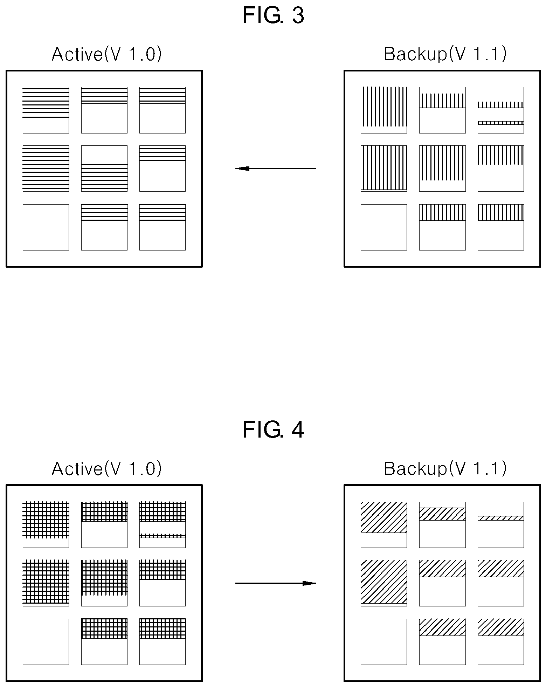

FIGS. 3 and 4 illustrate a DB synchronization process in an EMS system according to an exemplary embodiment of the present disclosure.

According to an exemplary embodiment of the present disclosure, a duplex EMS server having an active server and a backup server may perform DB synchronization between the active server and the backup server by using a list of name keys.

Previously, when a DB update instruction is issued, a backup server is updated first, and an active server keeps operating with the current DB since the system has to be operated. Then, after the backup server has been updated, the active server is updated to have the same DB as that of the backup server.

However, if an error occurs in the system such that the system is switched over after the backup server has been updated but the active server is not updated yet, the version of DB of the backup server becomes different from that of the active server. As a result, the DB synchronization fails. Accordingly, after the system is switched over, the backup server cannot be synchronized with the active server and is initialized.

In contrast, according to an exemplary embodiment of the present disclosure, even if the version of the DB in the active server is different from that of the backup server, by using a list of name keys, some of the DB can be synchronized that have identical name keys.

Each of the servers includes a processor, and the processor provides a list of name keys. When data is stored in the DB, the list of name keys is created. The list of name keys is created by the processor when the EMS is operated. A name key may be regarded as an ID assigned to access a data object. A name key is added whenever a data object is added. When the location and the order of data are changed, the listed name key is changed as well.

When an operator issues a DB update instruction via an operator terminal from outside, the DB update instruction is executed and the backup server is updated.

Let us assume that the DB version of the updated backup server is V1.1, for example.

Let us assume that the DB version of the active server currently working is V1.0.

Accordingly, it can be seen that the DB version of the backup server is different from the DB version of the active server. When this happens, in the related art, the servers cannot be synchronized until the active server is updated.

When the processor in the backup server recognizes that the DB of the backup server is different from the DB of the active server, the list of name keys is transmitted to the active server from the backup server.

Accordingly, as shown in FIG. 3, after the backup server has been updated, it transmits the updated list of name keys to the active server.

Subsequently, as shown in FIG. 4, the active server receives the list of name keys from the backup server and transmits only the name keys that coincide with the list of name keys of the current DB version to the backup server.

Such operations may be carried out by the processor of the active server.

Specifically, when the backup server sends a list of name keys, the processor of the active server determines whether the list of name keys of the current version of the DB in the active server is identical to the list of name keys of the updated backup server, and extracts name keys from the list, which are identical. Then, the processor of the active server transmits a list of identical name keys to the backup server, and the backup server requests synchronization according to the list, thereby synchronizing the DB in the active server with the DB in the backup server.

On the other hand, the name keys which are not identical, i.e., the data that exists in the DB in the backup server but not in the DB in the active server is not synchronized.

When the system is switched over and restarted later on, some data of the DB in the active server is backed up in synchronization with the DB in the backup server, and thus it is possible to prevent all data in the backup server is initialized.

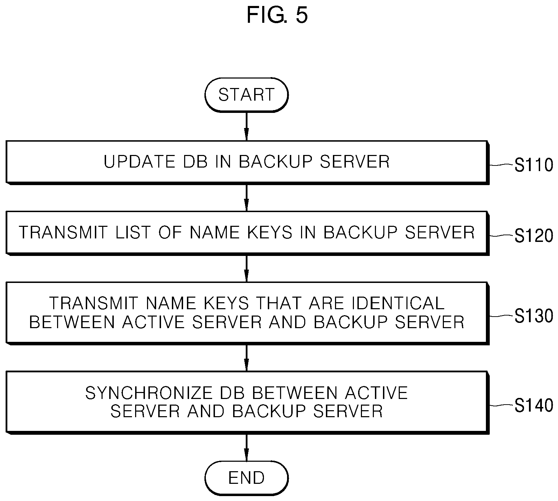

FIG. 5 is a flowchart for illustrating a DB synchronization process in the EMS system shown in FIGS. 3 and 4.

A DB update instruction is carried out pursuant to a user's intention.

Accordingly, a DB in the backup server is updated first (step S110).

Although the DB in the backup server is updated first pursuant to the update instruction in this exemplary embodiment, the DB in the active server may be updated first in some implementations. The list of name keys of the DB in the updated backup server is transmitted to the active server (step S120).

When the processor in the backup server recognizes that the DB of the backup server is different from the DB of the active server, the list of name keys is transmitted to the active server from the backup server.

For example, if an update operation is executed in the backup server pursuant to an update instruction, a list of name keys is sent to the active server, and then the active server may recognize that the backup server can be updated.

By doing so, the active server receives a list of name keys from the backup server, and extracts name keys that are identical between the lists between the active server and the backup server, to transmit only identical name keys to the backup server (step S130).

The DB of the active server is synchronized with that of the backup server (step S140).

This may be completed as the processor in the backup server copies and stores data corresponding to the name keys received from the active server.

Afterward, when the system is switched over, all of the data that correspond to the name keys not received from the active server by the processor of backup server are initialized, and the data synchronized with the active server is stored and may be reused at the time of restarting the system. Accordingly, data can be synchronized even for the active server having different DB versions during the DB update of the backup server.

As a result, an operator can synchronize DBs between duplex servers as desired even if the versions of the DBs are different from each other.

Moreover, according to an exemplary embodiment of the present disclosure, DBs having different versions can be synchronized based on name keys, such that consistency and synchronization of DBs between the active server and the backup server can be achieved, which are important elements. As a result, the DB can be managed more efficiently and the system can be operated more stably.

The present disclosure described above may be variously substituted, altered, and modified by those skilled in the art to which the present invention pertains without departing from the scope and sprit of the present disclosure. Therefore, the present disclosure is not limited to the above-mentioned exemplary embodiments and the accompanying drawings.

## Claims

1. A method of managing databases, DBs, in duplex servers comprising an active server and a backup server, the method comprising:
updating (S110) a DB in the backup server to a first version;
transmitting (S120) a list of name keys in the backup server to the active server;
transmitting (S130) name keys that are identical between the active server and the backup server to the backup server; and
synchronizing (S140) the DBs between the active server and the backup server by using the identical name keys.

2. The method of claim 1, wherein the version of the DB in the active server is a second version.

3. The method of claim 2, wherein the transmitting the list of name keys to the active server comprises
recognizing that the version of the DB in the backup server is different from the version of the DB in the active server.

4. The method of claim 1, wherein the transmitting the name keys to the backup server comprises
extracting the identical name keys based on a result obtained by comparing the list of name keys in the active server with the list of name keys of the backup server.

5. The method of claim 1, wherein the synchronizing the DBs between the active server and the backup server comprises
copying and storing data corresponding to the name keys received from the active server.

6. The method of claim 1, wherein each of the name keys is defined as an ID assigned to access a data object in the DB.

7. The method of claim 1, wherein the synchronizing the DBs between the active server and the backup server comprises
determining whether to copy and store data corresponding to the name keys received from the active server.

8. The method of claim 7, wherein the synchronizing the DBs between the active server and the backup server comprises
requesting synchronization according to the list of name keys received at the backup server from the active server.
